# EUROPEAN PATENT APPLICATION

(11) **EP 4 613 099 A1**
(43) Date of publication of application: **10.09.2025**
(21) Application number: 25161769.2
(22) Date of filing: 05.03.2025
(51) Int. Cl.: A21C 3/02, A21C 9/04

(54) **METHOD AND DEVICE FOR MANUFACTURING PU.. PASTRY OR CROISSANT DOUGH**

(30) Priority: 05.03.2024 NL 2037184
(71) Applicant: Radie B.V., 4104 BC Culemborg (NL)
(72) Inventor: van Blokland, Johannes, Josephus, Antonius, Culemborg (NL)
(74) Representative: IP Maison

(57) **Abstract**

Method for manufacturing puff pastry or croissant dough, comprising the steps of:
- Providing a sheet of dough that extends in a lengthwise and a widthwise direction;
- Applying a layer of fat, in particular butter, to the sheet of dough, which extends in the lengthwise direction mainly over the length of the dough, and in the widthwise direction covers a part of the width of the dough, in particular half of the width, thereby leaving a part of the sheet of dough free on both sides in the widthwise direction;
- Folding the parts of the sheet of dough that extend outside the layer of fat over the fat around a fold line that extends in the lengthwise direction and borders on the edge of the layer of fat;
- before folding the sheet of dough locally reducing the thickness of the sheet of dough
- at the fold lines; and/or at
- at least one of the sides of the sheet of dough that extend in the lengthwise direction.

## Description

The present invention relates to a method and device for manufacturing puff pastry or croissant dough. Puff pastry or croissant dough is a laminate of very thin layers of dough and fat. It is manufactured starting with a sheet of dough, providing a smaller layer of fat on top of it, then folding the dough over the fat, rolling the thus obtained package, then repeating the steps of folding and rolling. Theoretically, one can start with a layer of fat as well.

The quality of the resulting puff pastry or croissant dough, and especially its behaviour during baking, strongly depends on the homogeneity of the layers of dough and fat the laminate is made of. Both irregularities in the layers of fat and in the layers of dough result in undesired behaviour.

The present invention is based on an investigation of the causes of irregularities in the layers of fat and dough in industrially made puff pastry or croissant dough, and especially their causes. Research has revealed that these irregularities can be traced back to the folding lines of the initial dough sheet.

Based on this investigation result, it is a goal of the present invention to provide a method and device for creating a puff pastry or croissant dough, that lacks the mentioned disadvantage, and allows to form a puff pastry or croissant dough with a homogeneous layer thickness of all layers and with less irregularities. Alternatively, it is a goal of the present invention to provide a useful alternative to the prior art.

For that purpose, the invention proposes a method for manufacturing a puff pastry or croissant dough, comprising the steps of:
- Providing a sheet of dough that extends in a lengthwise and a widthwise direction;
- Applying a layer of fat, in particular butter, to the sheet of dough, which extends in the lengthwise direction mainly over the length of the dough, and in the widthwise direction covers a part of the width of the dough, in particular half of the width, thereby leaving a part of the sheet of dough free on both sides in the widthwise direction;
- Folding the parts of the sheet of dough that extend outside the layer of fat over the fat around a fold line that extends in the lengthwise direction and borders on the edge of the layer of fat; and, before folding the sheet of dough:
- locally reducing the thickness of the sheet of dough at the fold lines; and/or at
at least one of the sides of the sheet of dough that extend in the lengthwise direction.

By locally reducing the thickness of the sheet of dough at the fold lines, a thinner layer of dough flanks the layer of fat. When rolling or further folding the dough laminate, irregularities formerly caused by the fold when applying prior art methods have proved to be dissolved.

The step of locally reducing the thickness of the dough sheet over the fold lines, may preferably take place before applying the layer of fat to the dough sheet. When the steps are performed in this order, the chances of contamination of roller wheels or other means used to reduce the dough sheet thickness due to dough contact are reduced.

As the fold lines are intended for folding the dough sheet over the layer of fat, a width of the part of the dough sheet with the reduced thickness preferably corresponds or essentially corresponds to the thickness of the layer of fat.

Additionally, according to the method of the present invention, the thickness of the dough sheet of at least one of the sides of the dough sheet extending in the longitudinal direction may be locally reduced, and the parts of the dough sheet extending outside the layer of fat may be folded around said layer of fat, such that they overlap each other over the width of their reduced thickness. For instance, both sides may be reduced to a thickness of 50% of their original thickness.

As it is a requirement for obtaining a fine puff pastry or croissant dough to fully enclose the layer of fat, it is common practice when folding the dough sheet over the layer of fat, to let the ends of the dough sheet overlap. However, it was found by the applicant that this overlap is the source of another type of irregularities.

In an advanced embodiment of the present invention therefore, the method for forming a puff pastry or croissant dough comprises locally reducing the thickness of the dough sheet of both of the sides extending in the longitudinal direction, preferably such that the two reduced parts have a joint height that is equal to the original height of the dough sheet.

Further steps may be rolling a dough to a sheet and cutting its width to match or to slightly exceed the with of a fat layer to be applied, prior to adding a layer of fat onto said sheet. After folding the dough, it may be rolled and folded again a number of times.

The invention also relates to a device for producing puff pastry or croissant dough, comprising:
- a conveyor with a transport surface for transporting a dough sheet in a transport direction;
- a dispensing device for dispensing a layer of fat at a dispensing position in the transport direction at a predetermined position in the width direction with a predefined width in the width direction, wherein the width direction and the transport direction extend perpendicularly to each other on the transport surface;
- a first roller device, positioned at a distance against the direction of transport and therefore upstream of the dispensing device, comprising a first and a second roller wheel, for applying a first and second local reduced thickness in the dough sheet, wherein
- the first and the second roller wheel are configured to each apply a reduced thickness in a dough sheet, with an intermediate distance in the width direction that substantially corresponds to the predefined width of the layer of fat, and with a position between which the predetermined position for dispensing the layer of fat is centred.

A predefined width (which is the size in the width direction) of the layer of fat provided by a dispensing device is defined by the dispensing opening of said device. That means in the device for providing a puff pastry or croissant dough according to the present invention, the width of the dispensing opening and the distance between the first and second roller wheel are selected to match substantially or exactly, depending on the choice whether the parts of the dough sheet with a reduced thickness should extend beyond the width of the layer of fat or not, the predefined width of the layer of fat.

The device according to the invention may comprise a second roller device, comprising at least a third and preferably also a fourth roller wheel, for applying a third and preferably also fourth local reduced thickness in the dough sheet at at least one and preferably at both ends in the width direction of the dough sheet. These areas of the dough sheet with reduced thickness overlap after folding the dough over the layer of fat. As they both have a reduced thickness, the effect of the overlap is reduced.

In an embodiment, wherein a third and fourth roller wheel are present, the third and fourth roller wheel may be configured to each reduce the thickness of the dough sheet, in particular to half its original thickness, and for that purpose are adjustable in height relative to the transport surface.

The device according to the invention may further comprise a folding device, such as a pair of folding shoes or belts, for folding the parts of the dough sheet extending outside the layer of fat over said layer of fat, wherein the folding device is aligned with the first and second roller wheel to fold the dough sheet at the level of the first and second part of the dough sheet with reduced thickness.

In order to be able to vary the dough types and sizes and thicknesses of fat layers to be worked with, the position of the roller wheels that are present may be adjustable in the width direction. Preferably the roller wheels are exchangeable with ones of different widths or sizes.

Also a pressure or pre-tension with which the roller wheels present are inclined towards the transport surface may preferably be adjustable.

At least some of the roller wheels present may be movable between a use position and a parking position, as will be explained with reference to the following figures. Herein:
- Figures 1A, B show a cross section of a puff pastry or croissant dough according to the prior art;
- Figures 2A, B shows a cross section of a puff pastry or croissant dough according to the invention;
- Figure 3 shows a perspective view of a device according to the invention;
- Figure 4 A, B show a perspective view of a mechanical provision for a parking position.

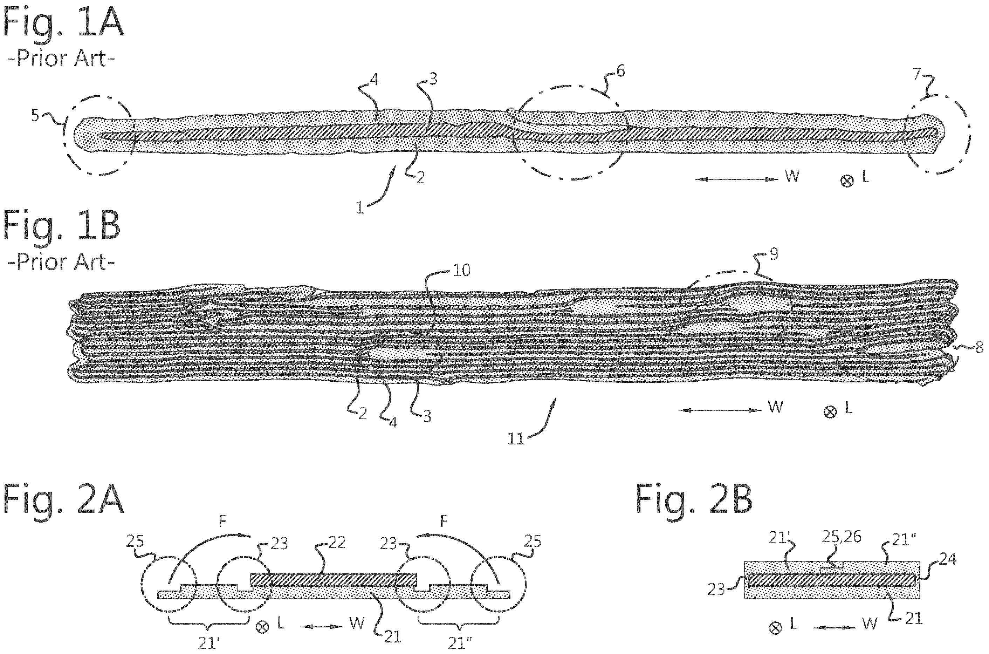

Figures 1A shows a cross section 1 of a puff pastry dough made according to the prior art. The dough comprises a layer of dough 2, 4 folded around a layer of fat 3. It is visible that there is no uniform thickness of the layers, especially at the spots 5, 6 and 7.

Figure 1B shows a puff pastry or croissant dough 11, which is formed from the puff pastry or croissant dough from figure 1A by a number laminating steps (folding and rolling). Spots 8, 9 and 10 indicate the undesired irregularities that occur.

Figure 2A shows a cross section 20 of a puff pastry or croissant dough during performance of a method for making a puff pastry or croissant dough according to the invention. A sheet of dough 21 is provided that extends in a lengthwise (into the drawing) L and a widthwise W direction. A layer of fat 22, in particular butter, is applied (on)to the sheet of dough 21, which extends in the lengthwise direction mainly over the length L of the dough 21, and in the widthwise direction covers a part of the width of the dough 21, in particular half of the width, thereby leaving a part 21', 22" of the sheet of dough 21 free (uncovered)on both sides in the widthwise direction. The parts 21' and 21" of the sheet of dough 21 that extend outside the layer of fat 22 are folded in a direction F over the fat 22 around a fold line 23, 24 that extends in the lengthwise direction L and borders on the edge of the layer of fat 22. Before folding the sheet of dough 21, the thickness of the sheet of dough 21 is reduced at the fold lines 23, 24; and at both sides 25, 26 of the sheet of dough 21 that extend in the lengthwise direction L.

Figure 2B shows the result after folding, wherein the fold lines 23, 24 enclose the fat layer in a uniform manner and ends 25, 26 overlap and form a uniform layer.

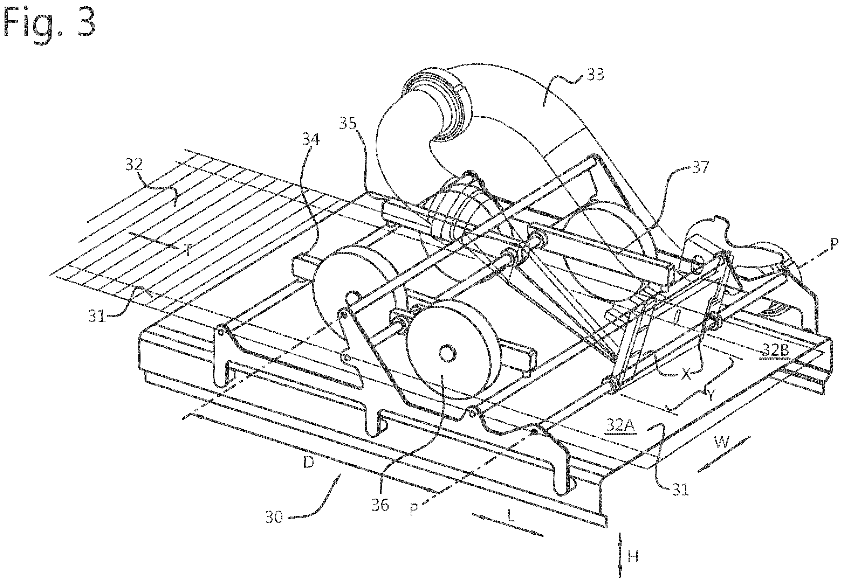

Figure 3 shows a perspective view of a device 30 for producing puff pastry or croissant according to the invention, comprising a conveyor with a transport surface 31 for transporting a dough sheet 32 in a transport direction T, a dispensing device 33 for dispensing a layer of fat at a dispensing position P in the transport direction T at a predetermined position X in the width direction W with a predefined width Y in the width direction, wherein the width direction W and the transport direction T extend perpendicularly to each other on the transport surface 31. The device 30 comprises a first roller device 34, 35, positioned at a distance D against the direction of transport T and therefore upstream of the dispensing device 33, comprising a first and a second roller wheel 34, 35, for applying a first and second local reduced thickness in the dough sheet 32, whereby the first and the second roller wheel 34, 35 are configured to each apply a reduced thickness in a dough sheet 32, with an intermediate distance in the width direction that substantially corresponds to the predefined width Y of the layer of fat, and with a position between which the predetermined position for dispensing the layer of fat is centred. The device 30 further comprises a second roller device 36, 37, comprising at least a third 36 and preferably also a fourth 37 roller wheel, for applying a third and preferably also fourth local reduced thickness in the dough sheet 32 at at least one and preferably at both ends 32A, B in the width direction of the dough sheet.

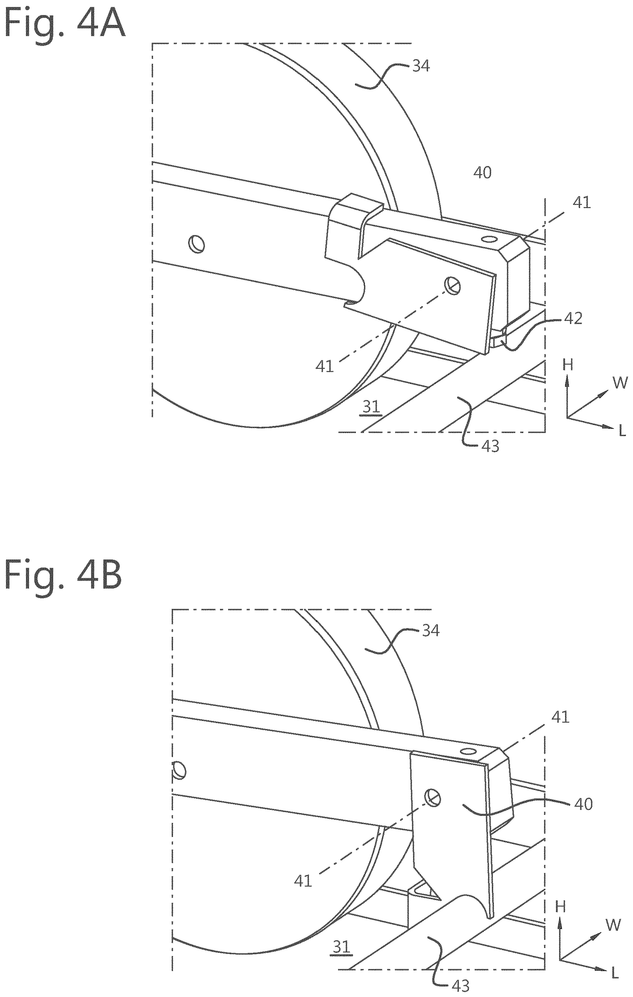

Figure 4A, B show further details of the roller wheel 34 of the device 30 from figure 3. A provision 40 is present, which makes the wheel movable between a use position (shown in figure 4A), wherein the wheel is relatively close to a conveyor surface 31 and therewith to dough 32 if present, and a parking position (shown in figure 4B), wherein the wheel is at a larger distance from the conveyor surface 31 and therewith from a dough. The mechanical provision comprises adjustment means 42 for adjusting the distance of the wheel 34 surface with respect to the conveyor surface 31. A support 40 us rotatable around an axis 41 between a use position (shown in figure 4A), and a parking position (shown in figure 4B),wherein it stably rests on a bar 43.

The embodiments shown are examples only and do not limit the scope of protection as defined in the following claims.

## Claims

1. Method for manufacturing puff pastry or croissant dough, comprising the steps of:
- Providing a sheet of dough that extends in a lengthwise and a widthwise direction;
- Applying a layer of fat, in particular butter, to the sheet of dough, which extends in the lengthwise direction mainly over the length of the dough, and in the widthwise direction covers a part of the width of the dough, in particular half of the width, thereby leaving a part of the sheet of dough free on both sides in the widthwise direction;
- Folding the parts of the sheet of dough that extend outside the layer of fat over the fat around a fold line that extends in the lengthwise direction and borders on the edge of the layer of fat;
**characterized by**
- before folding the sheet of dough locally reducing the thickness of the sheet of dough
- at the fold lines; and/or at
- at least one of the sides of the sheet of dough that extend in the lengthwise direction.

2. Method according to claim 1, comprising locally reducing the thickness of the sheet over the fold lines, wherein locally reducing the thickness of the sheet takes place before applying the layer of fat to the dough sheet.

3. Method according to claim 1, comprising locally reducing the thickness of the dough sheet over the fold lines, wherein the width of the reduced part of the dough sheet at least or substantially corresponds to the thickness of the layer of fat.

4. Method according to any of the preceding claims, comprising locally reducing the thickness of the dough sheet of at least one of the sides of the dough sheet extending in the longitudinal direction, and folding the parts of the dough sheet extending outside the layer of fat around said layer of fat, such that they overlap each other over the width of the reduced thickness.

5. Method according to claim 4, comprising locally reducing the thickness of the dough sheet of both of the sides extending in the longitudinal direction, preferably such that the two reduced parts have a joint height that is equal to the original height of the dough sheet.

6. Device for producing puff pastry or croissant dough, comprising:
- a conveyor with a transport surface for transporting a dough sheet in a transport direction;
- a dispensing device for dispensing a layer of fat at a dispensing position in the transport direction at a predetermined position in the width direction with a predefined width in the width direction, wherein the width direction and the transport direction extend perpendicularly to each other on the transport surface;
- a first roller device, positioned at a distance against the direction of transport and therefore upstream of the dispensing device, comprising a first and a second roller wheel, for applying a first and second local reduced thickness in the dough sheet, whereby the first and the second roller wheel are configured to each apply a reduced thickness in a dough sheet, with an intermediate distance in the width direction that substantially corresponds to the predefined width of the layer of fat, and with a position between which the predetermined position for dispensing the layer of fat is centred.

7. Device according to claim 6, comprising a second roller device, comprising at least a third and preferably also a fourth roller wheel, for applying a third and preferably also fourth local local reduced thickness in the dough sheet at at least one and preferably at both ends in the width direction of the dough sheet.

8. Device according to claim 7, wherein a third and fourth roller wheel are present, wherein the third and fourth roller wheel are configured to each reduce the thickness of the dough sheet, in particular to half its original thickness, and for that purpose are adjustable in height relative to the transport surface.

9. Device according to claim 6, 7 or 8, comprising a folding device, such as a pair of folding shoes or belts, for folding the parts of the dough sheet extending outside the layer of fat over said layer of fat, wherein the folding device is aligned with the first and second roller wheel to fold the dough sheet at the level of the first and second part with reduced thickness.

10. Device according to any of claims 6-8, wherein the position of the roller wheels present is adjustable in the width direction.

11. Device according to any of claims 6-10, wherein a pressure or pre-tension with which the roller wheels present are inclined towards the transport surface is adjustable.

12. Device according to any of claims 6 to 11, wherein at least some of the roller wheels present are movable between a use position and a parking position.

13. Device according to any of claims 6 to 12, comprising a laminating section for further folding and rolling the dough sheet folded around the layer of fat.
